Europäisches Patentamt

(19) European Patent Office

Office européen des brevets

(11) Publication number: **0 000 691**
**B1**

(12) **EUROPEAN PATENT SPECIFICATION**

(45) Date of publication of patent specification: **24.08.83**

(51) Int. Cl.³: **G 03 B 41/18**

(21) Application number: **78100143.3**

(22) Date of filing: **13.06.78**

(54) **X-ray film cassette loader.**

(30) Priority: **13.06.77 US 805817**

(43) Date of publication of application:
**21.02.79 Bulletin 79/4**

(45) Publication of the grant of the patent:
**24.08.83 Bulletin 83/34**

(84) Designated Contracting States:
**BE DE FR GB**

(56) References cited:
**FR - A - 1 263 585**
**NL - A - 275 651**
**US - A - 3 912 932**

(73) Proprietor: **E.I. DU PONT DE NEMOURS AND COMPANY**
**Legal Department 1007 Market Street**
**Wilmington Delaware 19898 (US)**

(72) Inventor: **Schmidt, Gunter**
**20645 Eagle Pass Drive**
**Malibu, California 90265 (US)**

(74) Representative: **Abitz, Walter, Dr.-Ing. et al,**
**Abitz, Morf, Gritschneder P.O. Box 86 01 09**
**D-8000 München 86 (DE)**

Courier Press, Leamington Spa, England

## X-ray film cassette loader

The invention relates to an X-ray film cassette loader for dispensing an X-ray film from a stack and for loading one film sheet at a time into a cassette. A lighttight receiver into which the enveloped film sheet stack can be inserted is mounted on a lighttight dispenser which passes only one film sheet at a time through its lower opening into the cassette which is held in a lighttight housing. The upper and lower openings of the dispenser form a lighttight seal with the receiver housing and the cassette-holding housing.

X-ray film cassette loaders make it possible to load an X-ray film sheet from a stack into a cassette under daylight conditions. An X-ray film cassette loader is known in accordance with the prior art portion of claim 1 (US 3 912 932) in which the dispenser of single X-ray sheets from the stack is associated with the receiver. The receiver is provided with a cutter for opening the film stack envelope. Individual films are removed by a suction member and dropped to a hopper. With a loader of this kind a new stack of film sheets can be inserted into the receiver only after the last film sheet of the preceding stack has been loaded into a cassette.

The invention as claimed solves the problem of how to design an X-ray film cassette loader in which the film sheet stack is transferred as a whole into the dispenser. The invention also comprises a receiver for receiving an envelope containing a stack of film sheets under daylight conditions, and for then releasing the stack of film sheets out of the envelope.

In a preferred form, the loader includes a lighttight receiver which can be opened to receive the envelope and has a clip at the upper end for holding the envelope and a groove near the opposite (bottom) end in which the envelope is placed so that the opposite end of the envelope extends beyond the groove. A rod lies in the groove over the envelope to seal it, so that the end of the envelope extending beyond the groove can be cut open without admitting light. When the end of the envelope is cut, the receiver housing closed and the receiver mounted on the dispenser, the rod can be pulled out to allow the stack of films to drop from the envelope into the dispenser. The dispenser housing preferably includes a backing plate which can slide down an incline to push the stack of films so the film furthest from the backing plate is pushed against a roller and is moved down on rotation of the roller into an open cassette lying in a cassette-holding housing. In the preferred form, the cassette-holding housing has an open top and can be pivoted between a first position aligned with the dispenser housing to receive a sheet into the cassette, or pivoted away so that the top of the cassette-holding housing is open for the removal of the cassette. The cassette is closed after the film sheet has dropped into the cassette and before the cassette is pivoted away for removal of the cassette.

Description of Drawings

Figure 1 is a perspective view of a film loader apparatus constructed in accordance with the present invention, with some of the protective housing cut away.

Figure 2 is a perspective view of the receiver housing of Figure 1, shown in an open condition and with a film-holding envelope therein.

Figure 3 is a sectional side view of the apparatus of Figure 1, shown with film still in the receiver housing and showing the cassette being inserted into the cassette-receiving housing.

Figure 4 is a view similar to Figure 3, but shown with the film sheets lying in the dispenser housing and the cassette held in the cassette-holding housing ready to receive a film sheet.

Figure 5 is a view taken on the line 5—5 of Figure 3.

Figure 6 is a perspective view of the cassette-holding housing of Figure 1, shown with the cassette in an open position.

Figure 7 is a view taken on the line 7—7 of Figure 6.

Description of Apparatus

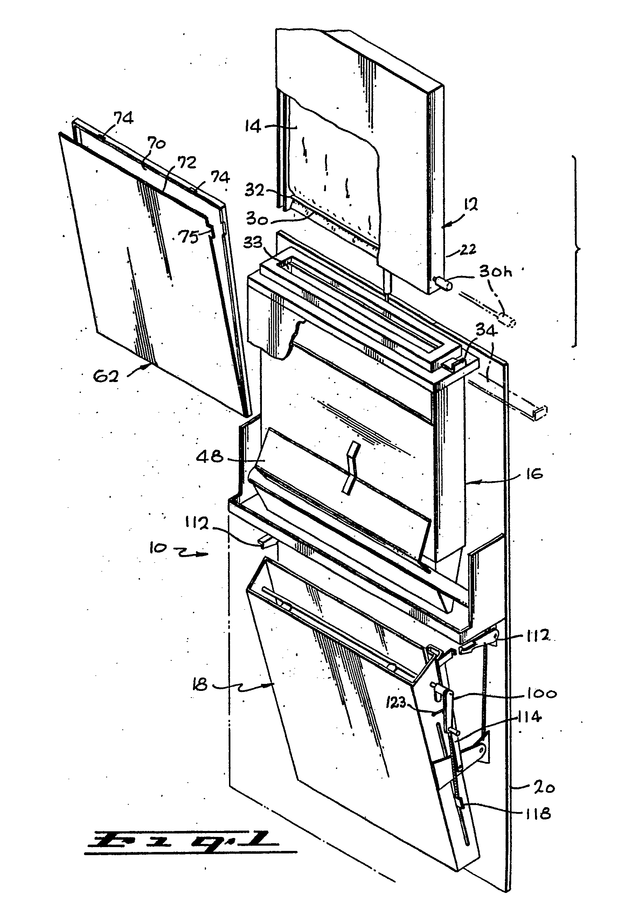

Fig. 1 illustrates a daylight loading apparatus 10 which includes a lighttight film package receiver 12, for receiving an envelope 14 containing a stack of sheets of X-ray film, and a dispenser 16 which can receive the stack of film from the envelope and dispense one film at a time. Envelope 14 is made from black plastic film and is accordingly lighttight. The apparatus also includes a holder 18 which can hold a cassette to receive a film and then close the cassette. A frame 20, which supports the dispenser 16 and holder 18, can be mounted on a wall or other location.

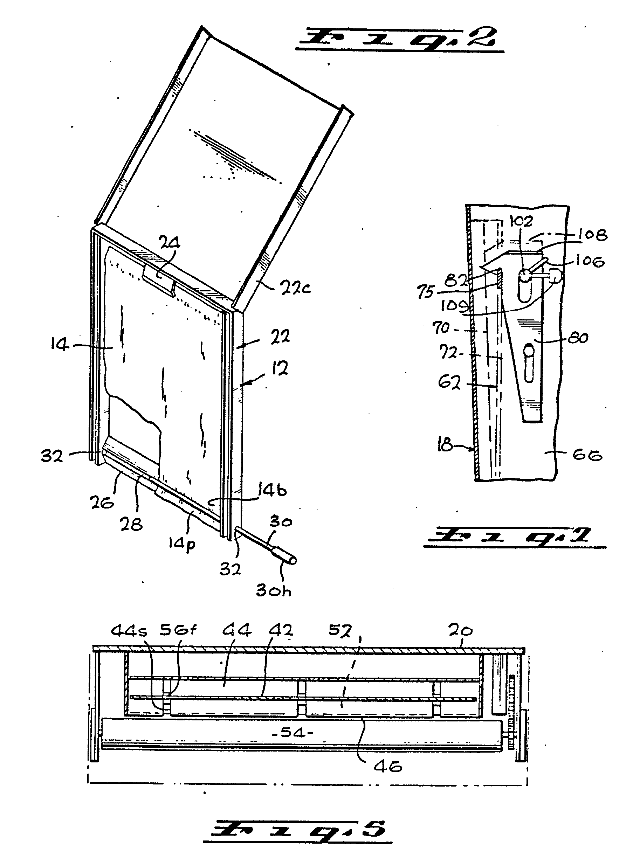

Fig. 2 illustrates the film package receiver 12 in an open condition, wherein a cover 22c of the receiver housing 22 has been swung open. The receiver includes a clip 24 at the upper portion of the housing for clipping to the film-holding envelope 14. A wall 26 at the bottom of the housing has a groove 28 which receives the lower portion 14p of the envelope. A rod 30 extending through holes 32 at the side of the housing, lies in the groove 28 over the envelope 14, to securely hold the lower end of the envelope in a lighttight seal in the groove 28. The envelope 14 is normally loaded while oriented in a horizontal position so that the normally top and lower ends are at the same level. After the top of the envelope is clipped in place at 24, and the lower end is held in groove 28 by the rod 30, the lower portion 14p of the envelope, which projects beyond the groove, can be cut by a scissors. No light will reach the film because the rod 30 and the groove 28 forms a lighttight seal with the envelope. After the envelope has been cut, the cover 22c of the housing is closed and the film receiver 12 can be mounted on top of the loading apparatus 10 in the manner shown in Fig. 1, wherein the bottom of the housing 22 is received in a corresponding hole 33 of the film dispenser 16.

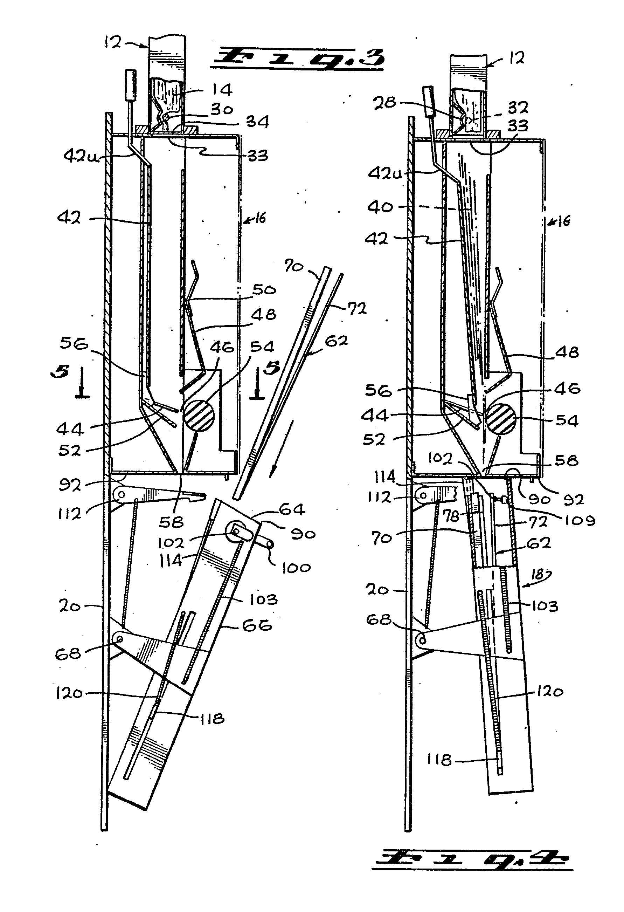

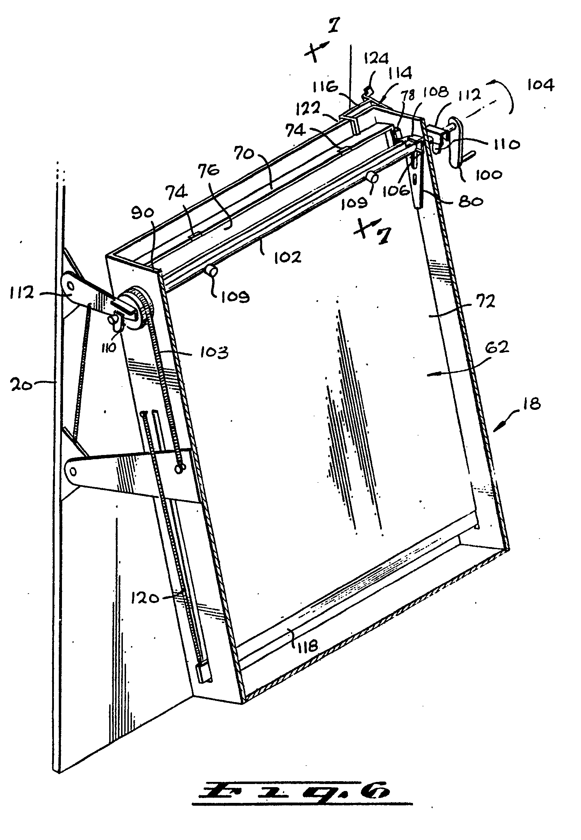

After the receiver 12 has been mounted on the dispenser 16, in a lighttight seal therewith, a light seal 34 on the dispenser is pulled out. Then a handle portion 30h is pulled out to remove rod 30 and release the film so that it can fall through the opening 33 into the dispenser 16. Fig. 3 illustrates the apparatus prior to pulling out the rod 30, while Fig. 4 illustrates the manner in which the stack of film sheets 40 falls down into the dispenser when the rod has been pulled out to release the film sheets. When the film sheets are in the dispenser, seal 34 can be reinserted and receiver 12 can then be removed. The dispenser 16 includes a backing plate 42, which blocks 56 of low friction material, such as an acetal plastic, at its lower end. When the film falls, it falls onto a downwardly inclined guide wall 44, at a position in front of the backing plate 42, so that the dispensing of individual sheets of film can begin, through a throat 46 formed between the forward edge of wall 44 and a roller 54. It may be noted that a guard 48 is provided that has a lower end lying over the throat 46 to prevent a jam of film sheets above the throat 46. The guard 48 is pivotally mounted at 50 and will easily deflect out of the way during normal dispensing of a film.

The blocks 56 at the bottom of the backing plate have fingers 56f (Fig. 5) extending through three slots 44s in the guide wall 44. The bottoms of the fingers 56f rest on an inclined wall 52 (Fig. 3), so that the plate moves forward when its upper end 42u is released.

Dispensing of film down through the throat 46 is initiated by manually releasing the backing plate 42 so it can slide forward towards the throat 46. This allows the blocks 56 at the bottom of the plate to move the film forward so that the forwardmost sheet is pushed against the roller 54 and can begin moving down when the roller 54 is rotated by a motor (not shown). The roller then pushes the sheet down through another throat 58.

A cassette 62 can be inserted into the cassette holder 18, by first pivoting the cassette holder to the position shown in Fig. 3 so that the open top 64 of the holder is accessible to receive the cassette. The cassette holder has a housing 66 pivotally mounted at 68 on the frame 20 of the loading apparatus. It may be noted that the pivot axis 68 is located behind the film dispensing throat, so that as the cassette holder 18 pivots back it also moves up slightly. After the cassette has been loaded into the holder 18, the holder is pivoted to the position shown in Fig. 4, wherein its open top 64 is aligned with the lower throat 58 of the dispenser. With the cassette 62 open, the downward movement of a film sheet 40, through the throat 58, brings the sheet into the cassette. The cassette is then closed, the holder 18 is pivoted to the position shown in Fig. 3, and the film-holding cassette can be removed.

Fig. 6 illustrates details of the cassette holder 18. The cassette 62 includes two walls 70, 72 hinged at their lower ends, and having latches 74 at their upper ends which hold the cassette closed when the walls 70, 72 are moved together. The rearward wall 70 of the cassette forms an opening 76 into which the forward wall 72 of the cassette is received when closed. When the cassette is inserted into the holder 18, the rearward wall 70 slides between a pair of walls 78 of the housing 66 that present a slide for the rearward cassette wall 70 while allowing the forward cassette wall 72 to hinge forwardly and remain open. A hold-open cam 80 can lift to receive a tab 75 of the forward cassette wall, as shown in Fig. 7, wherein the tab 75 is received in a slot 82 of the cam 80. Thus, when the cassette is inserted into the holder and pivoted open, its two walls 70, 72 are maintained open to assure that a film sheet will be dropped into an open cassette.

After the cassette has been loaded into the holder 18, the holder is pivoted to the position shown in Fig. 4. An edge 90, forming the top of the holder housing, forms a lighttight seal against the lower wall 92 of the dispenser, around the lower throat 58 through which a film sheet emerges. Thus, a lighttight seal is formed merely by pivoting back the top of the cassette holder 18. After the film has been dispensed from the dispenser 16, as described above, the cassette 62 must be closed before the holder 18 is pivoted forward. This is accomplished by turning a handle 100 (Fig. 6) located outside the cassette-holder housing 66.

The handle 100 tends to extend downwardly from a rotatable rod 102, because of a spring 103 coupled to the rod. When the handle 100 is turned in the direction of arrow 104, a camming pin 106 on the rod 102 engages a flange 108 on the cam 80 to lift it. Lifting of the cam releases tab 75 so that the forward wall 72 of the cassette can be closed against the rearward wall 70. Further turning of the handle 100 in the direction of arrow 104 brings a pair of closing cams 109 against the cassette wall 72 to push it closed. Still further turning of the handle causes a pair of release cams 110, fixed to the handle, to lift a pair of catches 112 that release the cassette holder 18 so its upper end can pivot forward. When the holder pivots forward, the cassette can be removed through the open top 64 of the cassette holder. The cassette 62 is then ready for placement in a chest X-ray machine.

Prior to the holder 18 pivoting forward, the cassette 62 is held down by a hold-down member 114 (Figs. 1 and 6) that is pivotally mounted at a side of the holder housing 66 and has an arm 116 that terminates in a lateral tab 122. Tab 122 normally extends through a slot in housing 66 where it can engage wall 70 of cassette 62 and is biased to that position by spring 123 (Fig. 1). At the same time, the cassette is urged upwardly by a cassette support 118 that is vertically slidable on the holder housing and that is upwardly biased by springs 120. As the holder 18 pivots forward, after the cassette therein has received a film and been closed, the hold-down member 114 is automatically pivoted out of the way of the cassette. This is accomplished by a hinged tab at the side of the dispenser bottom, which engages an arm 124 on the hold-down member 114 to pivot the hold-down member out of engagement with the cassette. The cassette then pops up under the force applied by spring 120, the facilitate removal of the cassette. When a technician installs another cassette in the holder, he can use the cassette to retract tab 122 and then pushes it down against the support 118, until tab 122 returns to its normal position over the cassette.

Thus, the invention also provides an apparatus for receiving an envelope containing a stack of film sheets, and means for loading individual film sheets into cassettes, all in a daylight environment. This is accomplished by an apparatus for opening the envelope, which includes a rod that holds an end portion of the envelope in a groove so that the envelope can be cut open without admitting light. A simple dispenser is utilized which can receive a stack of film from the envelope and dispense one sheet at a time. A cassette holder is utilized which can pivot from a position under the dispenser and in a lighttight fit therewith, to a second position wherein the cassette can be removed from the top of the cassette holder.

**Claims**

1. X-ray film cassette loader for dispensing an X-ray film sheet (40) from an envelope (14) containing a stack of film sheets and for loading one film sheet at a time into a cassette (62), comprising:

a lighttight dispenser (16) having upper and lower openings (33, 58);

a lighttight receiver housing (22) which can be opened to allow insertion of the envelope (14) which is mounted on and above the dispenser (16) after the envelope (14) is cut open and which has an exit at its lower end for discharging film sheets (40) to the dispenser (16);

a clip (24) at the upper end of the receiver housing (22) for holding one end of the envelope (14);

means for passing only one film sheet (40) at a time, to fall through the lower opening (58) of the dispenser (16) and

a lighttight cassette-holding housing (66) which has an open top (64) and is disposed under the dispenser (16) for holding of the cassette (62) in an open position under the lower opening (58) of the dispenser (16) and including cassette closing means (100, 109) for closing the cassette (62) while it lies in the cassette-holding housing (66),

The upper and lower openings (33, 58) of the dispenser (16) forming a lighttight seal with the receiver housing (22) and the cassette-holding housing (66), characterized by

a clamp (28, 30) at the lower end of the receiver housing (22) for clamping the envelope (14) near its opposite end which clamp (28, 30) is releasable from outside the receiver housing (22) to allow the film stack to fall down through the lower end of the receiver housing (22) to the dispenser (16) and

the means for passing only one film sheet (40) at a time being disposed adjacent to the lower opening (58) of the dispenser (16).

2. Loader as claimed in claim 1, wherein the housing (66) is mounted pivotally on a frame (20) for movement between a first position wherein the open top (64) of the housing (66) is in line with the dispenser (16) to receive a film sheet (40) therefrom, and a second position wherein the open top (64) is out of the way of the dispenser (16) to permit the insertion and removal of a cassette (62) therefrom,

the upper end of the housing (66) has a sealing means (90) around the open top (64) for forming a lighttight seal against the dispenser (16) when in the first position, and

a cam (80) is mounted movably on the housing (66) and engageable with the cassette (62) at its open end, a rod (102) rotatably mounted on the housing (66), and a pin (106) on the rod (102) for moving the cam (80) out of engagement with the cassette (62).

3. Loader as claimed in claim 2, wherein the cassette closing means includes a closing cam (109) on the rod (102) for pushing the cassette (62) to close it when the cam (80) has been moved out of engagement with the cassette (62), a handle (100) ouside the housing (66) for turning the rod (102), catches (112) for holding the housing (66) in the first position, and a release cam (110) coupled to the rod (102) to move with it and release the housing (66) from the catches (112) when the rod (102) turns far enough to close the cassette (62) in the housing (66), so that the housing (66) can then pivot to the second position for removal of the cassette (62).

4. Loader as claimed in claim 3 for use with a cassette (62) having a pair of walls (70, 72) pivotally joined at the hinged end, wherein

the cassette closing means includes receiving walls (78) which hold the first cassette wall (70), the cam (80) can hold the second cassette wall (72), to thereby prevent unintentional closing of the cassette (62) prior to it receiving a film (40) and

the rod (102) carries a member (106) which moves the cam (80) out of holding engagement with the second cassette wall (72) prior to pushing of the closing cam (109) against the cassette (62).

5. Loader as claimed in any one of claims 2 to 4 characterized in that

the axis (68) of pivoting of the housing (66) lies rearwardly of the path of film (40) moving out of the dispenser (16), whereby the upper end of the housing (66) moves upwardly as it pivots toward the first position.

6. Loader as claimed in claim 4 or claims 4 and 5, wherein a first member and a first cam (114, 80) hold the first and second walls (70, 72) of the cassette (62) apart,

the member carried by the rod (102) is a second cam (106) and is moveable to release the first cam (80) to allow the second wall (72) to move toward the first wall (70) and

a third cam (109) is coupled to the rod (102) and is moveable thereby against the cassette (62) to close it after the second cam (106) has released the first cam (80).

7. Loader as claimed in claim 6, wherein

a cassette support (118) for receiving a cassette (62) is disposed slidably in the housing (66) to urge an end of the cassette (62) to project from the housing open top (64) for easy removal;

a spring (120) urging the cassette support (118) toward the open end; and

means responsive to the cassette-holding housing (66) pivoting out of line with the film dispenser (16), for releasing the first member (114) which holds the first cassette wall (70), to allow the cassette to pop out of the housing (66).

8. Apparatus (receiver) for receiving a closed envelope (14) containing a stack of film sheets (40) under daylight conditions, and for then releasing the stack of film sheets (40) out of the envelope (14) comprising:

a lighttight receiver housing (22) which can be opened for receiving the envelope (14) and has a clip (24) at one end for holding one end of the envelope (14), characterized by

releasable means (28, 30) at the other end of the receiver housing (22) for clamping the envelope (14) near its other end which lies opposite the clip (24), across the width of the envelope (14), to prevent the entrance of light into the other end of the envelope when it is opened by cutting along a portion (14p) lying beyond the clamp means (28, 30), the clamp means (28, 30) being releasable while the housing (22) is closed to allow the stack of film sheets (40) to fall out of the envelope (14).

9. Apparatus as claimed in claim 8 characterized in that

the clamp means includes a wall containing a groove (28) elongated across the width of the receiver housing (22), and a rod (30) which lies in the groove (28), the rod (30) having a handle portion (30h) outside the housing (22) to enable the rod (30) to be pulled out.

10. Method for opening a lighttight envelope (14) containing a stack of film sheets (40) and loading the sheets (40) into a dispenser (16), without exposing the sheets (40) to daylight in the environment, comprising

securing a first end of the envelope (14) by a clip (24) to a first end of an opened but closable receiver housing (22) which has an open second end,

cutting open the second end of the envelope (14) and

mounting the receiver housing (22) on the dispenser (16) to form a lighttight seal about the open second end of the receiver housing (22), characterized by

before cutting open the second end of the envelope (14), placing the envelope (14) so that a portion adjacent its second end lies in a groove (28) at the second end of the receiver housing (22), so that the second end of the envelope (14) extends beyond the groove (28) and pressing a rod (30) against that portion of the envelope (14) to hold it tightly in the groove (28), cutting open the second end of the envelope beyond the groove and then closing the housing (22);

then mounting the receiver housing (22) on the dispenser (16) and

after mounting the receiver housing (22) on the dispenser (16), withdrawing the rod (30) from the groove (28) to allow the stack of film (40) to fall through the open end of the envelope (14) and the open second end of the receiver housing (22) into the dispenser (16).

## Revendications

1. Chargeur de cassettes à film pour rayons X, permettant de distribuer une feuille (40) de film pour rayons X à partir d'une enveloppe (14) contenant une pile de feuilles de film, et de charger les feuilles de film une par une dans des cassettes (62), chargeur comprenant un distributeur (16), impénétrable par la lumière, et muni d'ouvertures supérieure et inférieure (33, 58), un boîtier de réceptacle (22), impénétrable par la lumière, qui peut être ouvert pour permettre l'introduction de l'enveloppe (14), qui est monté sue et au-dessus du distributeur (16) après l'ouverture de l'enveloppe (14), et qui comporte, à son extrémité inférieure, une sortie pour transférer les feuilles de film (40) dans le distributeur (16), une pince (24), à l'extrémité supérieure du boîtier du réceptacle (22) pour maintenir une extrémité de ladite enveloppe (14), des moyens pour laisser passer une seule feuille de film (40) à la fois, pour qu'elle tombe à travers l'ouverture inférieure (58) du distributeur (16), un boîtier support de cassette (66), qui comporte une partie supérieure ouverte (64), est disposé en-dessous du distributeur (16) pour maintenir la cassette (62) en position ouverte en-dessous de l'ouverture inférieure (58) du distributeur (16), et comporte des moyens (100, 109) pour fermer la cassette (62) lorsqu'elle se trouve dans le boîtier du support de cassette (66), lesdites ouvertures supérieure et inférieure (33, 58) du distributeur (16) formant des joints impénétrables par la lumière, avec le boîtier du réceptacle (22) et le boîtier du support de cassette (66), et étant caractérisé en ce qu'il comporte en outre, à l'extrémité inférieure du boîtier du réceptacle (22), un dispositif de serrage (28, 30), pour serrer l'enveloppe (14) prés de son extrémité opposée, ce dispositif de serrage (28, 30) pouvant être libéré de l'extérieur du boîtier du réceptacle (22), pour permettre à la pile de films de tomber dans — le distributeur (16), à travers l'extrémité inférieure du boîtier du réceptacle (22), et que les moyens pour laisser passer une seule feuille de film (40) à la fois, sont disposés près de l'ouverture inférieure (58) du distributeur (16).

2. Chargeur selon la revendication 1, caractérisé en ce que le boîtier (66) est monté pivotant sur un cadre (20) pour se déplacer entre une première position, où la partie supérieure ouverte (64) dudit boîtier (66) est alignée avec le distributeur (16) pour en recevoir une feuille de film (40), et une seconde position, dans laquelle la partie supérieure ouverte (64) est dégagée du distributeur (16) pour permettre l'introduction d'une cassette (62) dans celui-ci, et son enlèvement, que l'extrémité supérieure du boîtier (66) comporte en élément de fermeture (90) entourant sa partie supérieure ouverte (64) pour former, avec le distributeur (16), un joint impénétrable par la lumière lorsque ledit boîtier (66) est dans sa première position, et qu'une came (80) est montée mobile sur le boîtier (66) et de façon à pouvoir coopérer avec la cassette (62) du côté de son extrémité ouverte, une tige (102) étant montée tournante sur ledit boîtier (66) et une ergot (106) étant disposé sur la tige (102) pour déplacer la came (80) de façon à la faire cesser de coopérer avec la cassette (62).

3. Chargeur selon la revendication 2, caractérisé en ce que les moyens de fermeture de la cassette comportent une came de fermeture (109) disposée sur la tige (102) de façon à pousser la cassette (62) pour la fermer lorsque la came (80) a été déplacée de façon à cesser de coopérer avec ladite cassette (62), une manivelle (100), disposée à l'extérieur du boîtier (66), pour faire tourner la tige (102), dès organes d'arrêt (112) pour maintenir le boîtier (66) dans la première position, et une came de libération (110) accouplée avec ladite tige (102) de façon à la déplacer et à libérer le boîtier (66) des organes d'arrêt (112) lorsque ladite tige (102) a tourné suffisamment pour fermer la cassette (62) dans le boîtier (66), de telle sorte que le boîtier (66) peut être alors amené par pivotement dans la seconde position, pour l'enlèvement de la cassette (62).

4. Chargeur selon la revendication 3, destiné à être utilisé avec une cassette (62) comportant une paire de parois (70, 72), réunies de façon pivotante à l'extrémité articulée, caractérisé par le fait que des organes de fermeture de la cassette comportent des parois (78) qui maintiennent la première paroi (70) de la cassette, dont la seconde paroi (72) peut être maintenue par la came (80) pour empêcher ainsi une fermeture intempestive de ladite cassette (62) avant qu'elle n'ait reçu un film (40), et que la tige (102) porte un organe (106), qui déplace la came (80) de façon à faire cesser sa coopération avec la seconde paroi (72) de la cassette, avant que la came de fermeture (109) ne soit poussée contre ladite cassette (62).

5. Chargeur selon l'une quelconque des revendications 2 à 4, caractérisé en ce que l'axe (68) de pivotement du boîtier (66) se trouve en arrière du trajet du film (40) sortant du distributeur (16), si bien que l'extrémité supérieure dudit boîtier (66) se déplace vers le haut lorsqu'il pivote vers sa première position.

6. Chargeur selon l'une quelconque des revendications 4 et 5, caractérisé en ce qu'un premier organe et une première came (114, 80) maintiennent écartées la première et la seconde parois (70, 72) de la cassette (62), que l'organe porté par la tige (102) est une seconde came (106), qui est mobile de façon à libérer la première came (80) pour permettre à la seconde paroi (72) de se déplacer vers la première paroi (70), et qu'une troisième came (109) est accouplée avec la tige (102) et peut être ainsi déplacée contre la cassette (62) pour la fermer après que la seconde came (106) a libéré la première came (80).

7. Chargeur selon la revendication 6, caractérisé en ce qu'un appui de cassette (118), destiné à recevoir une cassette (62), est monté coulissant dans le boîtier (66) de façon à pousser une extrémité de la cassette (62) et à la faire sortir de la partie supérieure, ouverte, (64), du boîtier, pour en faciliter l'enlèvement, qu'un ressort (120) pousse l'appui de cassette (118) vers l'extrémité ouverte (64), et que des moyens, déclenchés par la pivotement du boîtier (66) du support de cassette hors d'alignement avec le distributeur de films (16) sont prévus pour libérer le premier organe (114) qui maintient la première paroi (70) de la cassette, pour permettre à ladite cassette d'émerger dudit boîtier (66).

8. Dispositif pour recevoir une enveloppe fermée (14) contenant une pile de feuilles de film (40) à la lumière du jour, et pour libérer ensuite la pile de feuilles de film (40) de ladite enveloppe (14), dispositif comportant un boîtier de réceptacle (22), impénétrable par la lumière, pouvant être ouvert pour recevoir l'enveloppe (14) et comportant, à une extrémité, une pince (24) pour retenir une première extrémité de l'enveloppe (14), et étant caractérisé en ce qu'il comporte en outre, à la seconde extrémité du boîtier (22) du réceptacle, qui est opposée à la pince (24), des moyens libérables (28, 30) pour serrer l'enveloppe (14), près de sa seconde extrémité, correspondante, transversalement à la largeur de ladite enveloppe (14), de façon à empêcher la lumière de pénétrer dans ladite seconde extrémité de l'enveloppe lorsqu'elle est ouverte par découpage le long d'une partie (14p) située au-delà des moyens de serrage (28, 30), ces derniers étant libérables lorsque ledit boîtier (22) est fermé, pour permettre à la pile de feuilles de film (40) de tomber hors de l'enveloppe (14).

9. Dispositif selon la revendication 8, caractérisé par le fait que les moyens de serrage comportent une paroi, dans laquelle une rainure (28) est aménagée de façon à s'étendre suivant la largeur du boîtier (22) du réceptacle, ainsi qu'une tige (30), qui est engagée dans ladite rainure (28), cette tige (30) ayant une partie en forme de poignée (30a), située à l'exterieur du boîtier (22), pour permettre l'extraction de ladite tige (30).

10. Méthode pour ouvrir une enveloppe (14), impénétrable par la lumière, et contenant une pile de feuilles de film (40), et pour charger les feuilles de film (40) dans un distributeur (16), sans les exposer à la lumière du jour, méthode consistant à fixer la première extrémité de l'enveloppe (14) par une pince (24), à une première extrémité du boîtier (22) d'un réceptacle, qui est ouvert, mais peut être fermé, et comporte une seconde extrémité, ouverte, à ouvrir par découpage la seconde extrémité de l'enveloppe (14), et à monter le boîtier (22) du réceptacle sur le distributeur (16) de façon à former autour de la seconde extrémité, ouverte, dudit boîtier (22), un joint impénétrable par la lumière, méthode caractérisée par le fait que, avant d'ouvrir, par découpage, la seconde extrémité de l'enveloppe (14), on place ladite enveloppe (14) de manière qu'une partie voisine de sa seconde extrémité se trouve dans une rainure (28) au niveau de la seconde extrémité du boîtier (22) du réceptacle, de telle sorte que ladite seconde extrémité de l'enveloppe (14) s'étende au-delà de ladite rainure (28), qu'on serre une tige (30) contre cette partie de l'enveloppe (14) pour la maintenir fermement dans ladite rainure (28), qu'on — ouvre par découpage la seconde extrémité de l'enveloppe au-delà de ladite rainure (28), qu'on ferme ensuite le boîtier (22), qu'on monte ledit boîtier (22) sur le distributeur (16), et que l'on retire enfin la tige (30) de la rainure (28) pour permettre à la pile de films (40) de tomber dans le distributeur (16) à travers l'extrémité ouverte de l'enveloppe (14) et la seconde extrémité, ouverte, du boîtier (22).

**Patentansprüche**

1. Vorrichtung zum Laden einer Röntgenfilmkassette zum Ausgeben eines Röntgenfilmblattes (40) aus einer Umhüllung (14), die einen Stapel von Filmblättern enthält, und zum Laden jeweils eines Filmblattes in eine Kassette (62), mit

einer lichtdichten Ausgabeeinrichtung (16) mit einer oberen und einer unteren Öffnung (33, 58);

einem lichtdichten Aufnahmegehäuse (22), das zum Einlegen der Umhüllung (14) geöffnet werden kann, das auf und oberhalb der Ausgabeeinrichtung (16) angeordnet wird, nachdem die Umhüllung (14) aufgeschnitten ist, und das einen Austritt an seinem unteren Ende zum Austragen von Filmblättern (40) zu der Ausgabeeinrichtung (16) aufweist;

einer Klammer (24) am oberen Ende des Aufnahmegehäuses (22) zum Festhalten eines Endes der Umhüllung (14);

einer Einrichtung zum Durchlassen von jeweils nur einem Filmblatt (40), damit dieses durch die untere Öffnung (58) der Ausgabeeinrichtung (16) fällt und

einem lichtdichten Kassettenhaltegehäuse (66), das eine offene Oberseite (64) aufweist, unter der Ausgabeeinrichtung (16) angeordnet ist, um die Kassette (62) in einer offenen Stellung unter der unteren Öffnung (58) der Ausgabeeinrichtung (16) zu halten, und Kassettenschliesseinrichtungen (100, 109) zum Verschliessen der Kassette (62) aufweist, wenn diese in dem Kassettenhaltegehäuse (66) liegt, wobei die obere und die untere Öffnung (33, 58) der Ausgabeeinrichtung (16) eine lichtdichte Abdichtung mit dem Aufnahmegehäuse (22) und dem Kassettenhaltegehäuse (66) bildet, gekennzeichnet durch

eine Klemmeinrichtung (28, 30) am unteren Ende des Aufnahmegehäuses (22) zum Festklemmen der Umhüllung (14) nahe ihrem entgegengesetzten Ende, welche Klemmeinrichtung (28, 30) von der Aussenseite des Aufnahmegehäuses (22) lösbar ist, so dass der Filmstapel abwärts durch das untere Ende des Aufnahmegehäuses (22) in die Ausgabeeinrichtung (16) fällt und

die Anordnung der Einrichtung zum Durchlassen von jeweils nur einem Filmblatt (40) angrenzend an die untere Öffnung (58) der Ausgabeeinrichtung (16).

2. Ladevorrichtung nach Anspruch 1, wobei das Gehäuse (66) verschwenkbar an einem Rahmen (20) befestigt ist zur Bewegung zwischen einer ersten Stellung, in der sich die offene Oberseite des Gehäuses (66) in Ausrichtung mit der Ausgabeeinrichtung (16) befindet zur Aufnahme eines Filmblattes (40) daraus, und einer zweiten Stellung, in der die offene Oberseite (64) ausserhalb des Weges der Ausgabeeinrichtung (16) ist, um das Einsetzen und Entnehmen einer Kassette (62) zuzulassen, das obere Ende des Gehäuses (66) eine Dichtungseinrichtung (90) um die offene Oberseite (64) aufweist zur Bildung einer lichtdichten Abdichtung gegenüber der Ausgabeeinrichtung (16) in der ersten Stellung und ein Hubglied (80) verschiebbar an dem Gehäuse (66) befestigt ist und in Eingriff bringbar ist mit der Kassette (62) an derem offenen Ende, einer Stange (102), die drehbar an dem Gehäuse (66) befestigt ist, und einem Stift (106) an der Stange (102) zum Bewegen des Hubgliedes (80) aus dem Eingriff mit der Kassette (62).

3. Ladevorrichtung nach Anspruch 2, wobei die Kassettenschliesseinrichtung einen Schliessnocken (109) an der Stange (102) zum Schieben der Kassette (62) aufweist, um sie zu schliessen, wenn das Hubglied (80) aus dem Eingriff mit der Kassette (62) bewegt worden ist, einen Handgriff (100) ausserhalb des Gehäuses (66) zum Drehen der Stange (102), Klinken (112) zum Halten des Gehäuses (66) in der ersten Stellung und einen Freigabenocken (110), der mit der Stange (102) zur Bewegung mit dieser verbunden ist sowie zum Freigeben des Gehäuses (66) aus den Klinken (112), wenn sich die Stange (102) weit genug dreht, um die Kassette (62) in dem Gehäuses (66) zu Schliessen, so dass das Gehäuse (66) dann in die zweite Stellung zur Entnahme der Kassette (62) verschwenken kann.

4. Ladevorrichtung nach Anspruch 3 zur Verwendung mit einer Kassette (62) mit zwei Wänden (70, 72), die an dem Gelenkende verschwenkbar verbunden sind, wobei die Kassettenschliesseinrichtung Aufnahmewände (78) aufweist, die die erste Kassettenwand (70) halten, das Hubglied (80) die zweite Kassettenwand (72) halten kann, um dadurch ein versehentliches Schliessen der Kassette (62), bevor sie einen Film (40) aufnimmt, zu verhindern, und die Stange (102) ein Bauteil (106) trägt, das das Hubglied (80) aus dem Halteeingriff mit der zweiten Kassettenwand (72) bewegt, bevor der Schliessnocken (109) gegen die Kassette (62) geschoben wird.

5. Ladevorrichtung nach einem der Ansprüche 2 bis 4, dadurch gekennzeichnet, dass die Schwenkachse (68) des Gehäuses (66) hinter der Bahn des Films (40) liegt, der sich aus der Ausgabeeinrichtung (16) bewegt, wodurch sich das obere Ende des Gehäuses (66) nach oben bewegt, wenn es sich in die erste Stellung dreht.

6. Ladevorrichtung nach Anspruch 4 oder Ansprüchen 4 und 5, wobei ein erstes Bauteil und ein erstes Hubglied (114, 80) die erste und die zweite Wand (70, 72) der Kassette (62) auseinanderhalten, das von der Stange (102) getragene Bauteil ein zweites Hubglied (106) ist und zur Freigabe des ersten Hubgliedes (80) bewegbar ist, um eine Bewegung der zweiten Wande (72) zu der ersten Wande (70) zu ermöglichen, und ein drittes Hubglied (109) mit der Stange (102) verbunden ist und dadurch gegen die Kassette (62) bewegbar ist, um sie zu schliessen, nachdem das zweite Hubglied (106) das erste Hubglied (80) freigegeben hat.

7. Ladevorrichtung nach Anspruch 6, wobei ein Kassettenhalter (118) zur Aufnahme einer Kassette (62) gleitbar in dem Gehäuse (66) angeordnet ist, um ein Ende der Kassette (62) zur leichten Entnahme aus der offenen Oberseite (64) des Gehäuses herausstehen zu lassen;

eine Feder (120) den Kassettenhalter (118) zu der offenen Oberseite hindrückt und

Einrichtungen infolge des Verschwenkens des Kassettenhaltegehäuses (66) aus der Ausrichtung mit der Filmausgabeeinrichtung (16) zur Freigabe des ersten Bauteils (114), das die erste Kassettenwand (70) hält, die Kassette aus dem Gehäuse (66) springen lassen.

8. Vorrichtung (Aufnahmeeinrichtung) zur Aufnahme einer geschlossenen Umhüllung (14), die unter Tageslichtbedingungen einen Stapel von Filmblättern (40) enthält, und zur anschliessenden Freigabe des Stapels von Filmblättern (40) aus der Umhüllung (14), mit einem Tageslicht-Aufnahmegehäuse (22), das zur Aufnahem der Umhüllung (14) geöffnet werden kann und eine Klammer (24) am einen Ende zum Halten eines Endes der Umhüllung (14) aufweist, gekennzeichnet durch lösbare Einrichtungen (28, 30) am anderen Ende des Aufnahmegehäuses (22) zum Festklemmen der Umhüllung (14) über die Breite der Umhüllung (14) naher ihrem anderen Ende, das der Klammer (24) gegenüberliegt, um den Eintritt von Licht in das andere Ende der Umhüllung zu verhindern, wenn es durch einen Schnitt entlang eines Bereiches (14p), der jenseits der Klemmeinrichtung (28, 30) liegt, geöffnet wird, wobei die Klemmeinrichtung (28, 30) lösbar ist, wenn das Gehäuse (22) geschlossen ist, um den Stapel von Filmblättern (40) aus der Umhüllung (14) herausfallen zu lassen.

9. Vorrichtung nach Anspruch 8, dadurch gekennzeichnet, dass die Klemmeinrichtung eine Wand mit einer Rille (28), die sich über die Breite des Aufnahmegehäuses (22) erstreckt, und eine Stange (30) aufweist, die in der Rille (28) liegt, wobei die Stange (30) ausserhalb des Gehäuses (22) einen Handgriffabschnitt (30h) aufweist, damit die Stange (30) herausgezogen werden kann.

10. Verfahren zum Öffnen einer lichtdichten Umhüllung (14), die einen Stapel von Filmblättern (40) enthält, und zum Laden der Blätter (40) in eine Ausgabeeinrichtung (16), ohne die Blätter (40) dem Tageslicht in der Umgebung auszusetzen, wobei ein erstes Ende der Umhüllung (14) durch eine Klammer (24) an einem ersten Ende eines geöffneten, jedoch verschliessbaren Aufnahmegehäuses (22) befestigt wird, das ein offenes zweites Ende hat, das zweite Ende der Umhüllung (14) aufgeschnitten wird und das Aufnahmegehäuse (22) auf der Ausgabeeinrichtung (16) befestigt wird, um eine lichtdichte Abdichtung um das offene zweite Ende des Aufnahmegehäuses (22) herum zu bilden, dadurch gekennzeichnet, dass vor dem Aufschneiden des zweiten Endes der Umhüllung (14) die Umhüllung (14) so angeordnet wird, dass ein an ihr zweites Ende angrenzender Bereich in einer Rille (28) an dem zweiten Ende des Aufnahmegehäuses (22) liegt, so dass sich das zweite Ende der Umhüllung (14) jenseits der Rille (28) erstreckt, und eine Stange (30) gegen diesen Bereich der Umhüllung (14) gedrückt wird, um ihn fest in der Rille (28) zu halten, das zweite Ende der Umhüllung jenseits der Rille aufgeschnitten wird und dann das Gehäuse (22) geschlossen wird,

das Aufnahmegehäuse (22) dann auf der Ausgabeeinrichtung (16) befestigt wird und

nach Befestigung des Aufnahmegehäuses (22) auf der Ausgabeeinrichtung (16) die Stange (30) aus der Rille (28) zurückgezogen wird, um den Stapel von Filmen (40) durch das offene Ende der Umhüllung (14) und das offene zweite Ende des Aufnahmegehäuses (22) in die Ausgabeeinrichtung (16) fallen zu lassen.

Fig. 1

Fig.2

Fig.1

Fig.3

_Fig.3_

_Fig.4_

*Fig. 6*